# EUROPÄISCHE PATENTSCHRIFT

(11) **EP 0 754 523 B1**
(45) Veröffentlichungstag und Bekanntmachung des Hinweises auf die Patenterteilung: **01.08.2001**
(21) Anmeldenummer: 96108398.7
(22) Anmeldetag: 28.05.1996
(51) Int. Cl.: B23Q 35/128, G05B 19/42

(54) **Verfahren zum Vermessen einer sich etwa in Längsrichtung erstreckten Raumkontur**
Process of measuring an approximately longitudinal boundary
Procédé pour mesurer une ligne de séparation approximativement longitudinale

(30) Priorität: 17.07.1995 DE 19525987
(43) Veröffentlichungstag der Anmeldung: 22.01.1997
(73) Patentinhaber: Bayerische Motoren Werke Aktiengesellschaft, 80788 München (DE)
(72) Erfinder: Gieseler, Otto, 85716 Unterschleissheim (DE); Lindner, Walter, 82140 Olching (DE)

(56) Entgegenhaltungen:
- EP-A- 0 323 277
- EP-A- 0 550 768
- DE-A- 3 836 198

## Beschreibung

Die Erfindung bezieht sich auf ein Verfahren mit den Merkmalen des Oberbegriffs von Patentanspruch 1.

Ein derartiges Verfahren ist weit verbreitet. Es ist auch unter der Bezeichnung Tape- oder Linefollowing bekannt, und dient dazu, optische und/oder geometrische (Trenn-)Linien in und auf dreidimensionalen Freiformflächen in ihrem Verlauf zu bestimmen. Die Bestimmung des Verlaufs der Raumkontur erfolgt i.d.R. mit Hilfe einer Punktwolke, d.h. einer Fülle von Abtastpunkten, deren Lage durch ihre Koordinaten bestimmt sind. Aus der Punktwolke wird der Verlauf der Raumkontur rekonstruiert. Diese Rekonstruktion bereitet häufig erhebliche Schwierigkeiten, da einerseits eine große Dichte der Abtastpunkte erforderlich ist, um den Verlauf der Raumkontur mit ausreichender Genauigkeit rekonstruieren zu können. Andererseits aber sind die Koordinaten der Abtastpunkte, bedingt durch den nie zu vermeidenden Messfehler, mit Fehlern behaftet, deren Größe von Punkt zu Punkt variiert. Gerade bei scharfkantigen Raumkonturen wirken sich die sich teilweise kumulierenden, teilweise auch absorbierenden Messfehler besonders nachteilig aus, da als weiterer Einflussfaktor für den Messfehler die Orientierung der Abtasteinrichtungen in Bezug auf den Verlauf der Raumkontur in Erscheinung tritt.

Bei einem mechanischen Abtastsystem besteht dieses Problem ebenfalls. Ein Lösungsansatz ist in der DE 40 06 949 A1 angegeben. Aus dieser Druckschrift wird insbesondere der zusätzliche Einfluss, der durch die Orientierung der Abtasteinrichtung in Bezug auf den Verlauf der Raumkontur hervorgerufen wird, besonders deutlich.

Schließlich ist aus der EP 323 277 A ein Verfahren zur automatischen Schweißnahtverfolgung auf der Basis eines vorab angelernten Flächenmodells bekannt. Mit Hilfe dieses Verfahrens ist es nicht möglich, eine Raumkontur einer unbekannten Formfläche ohne vorbereitenden Lernvorgang abzutasten. Der Erfindung liegt die Aufgabe zugrunde, ein Verfahren der eingangs genannten Art zu schaffen, das sich durch einen einfachen Verfahrensablauf bei gleichzeitig hoher Meßgenauigkeit auszeichnet.

Die Erfindung löst diese Aufgabe durch die kennzeichnenden Merkmale des Patentanspruchs 1.

Bei der Erfindung werden annähernd parallele Schnitte quer zum Verlauf der Raumkontur gebildet. Gleichzeitig wird die Raumkontur mit Hilfe der Raumpunkte angenähert. Im Gegensatz zu bekannten Glättungsverfahren wird hier nicht der Versuch unternommen, die Raumkontur möglichst exakt nachzubilden, sondern statt dessen wird eine Raumkontur gebildet, die geometrisch als die Schnittlinie der Flächen zu betrachten ist, die über die Raumkontur miteinander in geometrischer Verbindung stehen.

Die bewußt scharfkantige Ersatzkontur, die in der erfindungsgemäßen Weise aus der Raumkontur gebildet ist, kann anstelle der Kontur selbst weiteren Verfahrensschritten zugrundegelegt werden. Darunter ist beispielsweise ein Fräsprogramm für ein Kopierfräser zu verstehen, der die durch die Abtasteinrichtung untersuchte Oberfläche nachbildet. Die Ersatzkontur kann auch für nachfolgende Verarbeitungsschritte angesetzt werden, bei denen die zu bestimmende Oberfläche mit Hilfe bekannter CA-Techniken, wie CAD und CAE weiterbearbeitet wird.

Die Erfindung geht somit einen grundsätzlich anderen Weg. Während übliche Techniken darauf abstellen, die Raumkontur möglichst realitätsnah nachzubilden, wird nun die Raumkontur durch die Ersatzkontur angenähert. Basis hierfür ist die Überlegung, daß die Ersatzkontur aus dem Verlauf der an die Raumkontur angrenzenden Teilflächen exakt bestimmt werden kann und daß der Fehler zwischen Raumkontur und Ersatzkontur zu vernachlässigen ist, sofern die berücksichtigten Teilflächen möglichst nahe an der Raumkontur enden.

Die Ersatzkontur kann sogar während der Vermessung der die Raumkontur enthaltenden Oberfläche dazu verwendet werden, den Verlauf der Raumkontur zu bestimmen. Dabei wird die Ersatzkontur als Vorgabe für die Bahnsteuerung der Abtasteinrichtung eingesetzt. Die Bahnsteuerung folgt dem Verlauf der Ersatzkontur ggf. mit einem definierten Abstand und erreicht einen zumindest annähernd gleichbleibenden Abstand der Abtasteinrichtung gegenüber der Raumkontur. Damit wird der Einfluß eines sich ändernden Abstands der Abtastvorrichtung von dem abzutastenden Objekt weitgehend eliminiert.

Anhand der Zeichnung ist die Erfindung weiter erläutert. Es zeigt
- Fig. 1: eine perspektivische Ansicht einer abzutastenden Oberfläche mit einer Raumkontur
- Fig. 2: ein Diagramm zur Erläuterung des erfindungsgemäßen Verfahrens.

Mit Hilfe einer nicht dargestellten Laser-Abtasteinrichtung wird eine Oberfläche 1 in ihrem Verlauf bestimmt. Innerhalb der Oberfläche verläuft eine Raumkontur, die der Einfachheit halber durch einen Strich 2 andeutet ist. Die Raumkontur wird quer zu ihrem Verlauf vermessen. Dabei wird längs einer Bahn die räumliche Lage von in etwa äquidistanten Meßpunkten M1 - M9 bestimmt. Die Richtung der Bahn wird zu Beginn der Messung z.B. manuell vorgegeben. Der Abstand der Abtasteinrichtung von der Oberfläche wird auf einen zumindest annähernd konstanten Wert geregelt. Die hierzu vorgesehene, an sich bekannte Lageregeleinrichtung für die Abtasteinrichtung soll nicht dargestellt werden. Die Meßpunkte M1 - M5 liegen in etwa in einer planen Oberfläche, der Meßpunkt M6 liegt im Bereich der Raumkontur, die Meßpunkte M7 - M9 liegen wiederum im Verlauf einer planen Oberfläche, die jedoch gegenüber der Oberfläche für die Meßpunkte M1 - M5 schiefwinklig verläuft.

Die geometrische Eigenschaft der beiden zueinander geneigten Oberflächen ergibt sich aus dem Verlauf der Meßpunkte M1 - M5 einerseits und M7 - M9 andererseits. Deren Koordinaten liegen in etwa auf Geraden. Die Lage des Meßpunkts M6 ergibt sich aus dem Umstand, daß ihre Koordinaten weder die Geradengleichung der einen noch die der anderen Ebene erfüllen.

Anhand des Verlaufs der Raumkontur wird nun ein weiterer Satz von Meßdaten N1 - N9 gewonnen, die ebenfalls wieder etwa äquidistant angeordnet sind und deren Abtastebene parallel zu der für die Meßpunkte M1 - M9 verläuft. Die Meßpunkte N1 - N5 liegen in derselben Ebene wie die Meßpunkte M1 - M5. Ähnliches gilt für die Meßpunkte N7 - N9. Diese liegen in der Ebene der Meßpunkte M7 - M9.

Mit Hilfe der so gewonnenen Meßpunkte wird der Verlauf der Raumkontur, in der die Meßpunkte M6 und N6 liegen, in besonderer Weise rekonstruiert. Anstelle des Versuchs, diesen Verlauf beispielsweise durch eine Verdichtung der Meßpunkte im Verlauf der Raumkontur zu bestimmen, wird anstelle der Raumkontur eine Ersatzkontur gebildet, die als Schnittlinie der beiden genannten Flächen gebildet ist. Die eine Fläche ist bestimmt durch die Meßpunkte M1 bis M5 und N1 bis N5, während die zweite Fläche durch die Meßpunkte M7 bis M9 und N7 und N9 definiert ist. Der tatsächliche Fehler, in der Zeichnung aus Gründen der Übersichtlichkeit besonders groß dargestellt, ist tatsächlich relativ gering. Dies gilt vor allem dann, wenn die in der genannten Weise definierten Flächen möglichst nahe an die Raumkontur heranreichen.

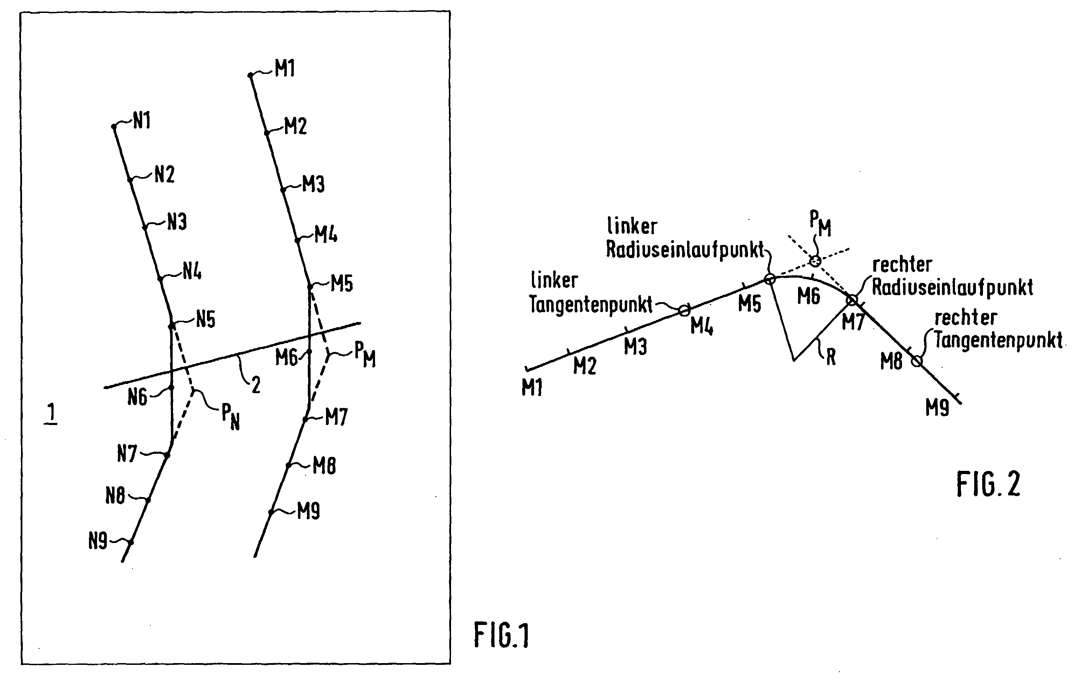

Das erfindungsgemäße Verfahren ist anhand von Fig. 2 weiter erläutert. In Fig. 2 ist der Verlauf der Meßpunkte M1 bis M9 für den ersten Schnitt gezeigt. Die Raumkontur wird durch einen Kreisbogen mit dem Radius R angenähert. Aus der Bestimmung des Kreisbogens, hierzu wird beispielsweise die Methode der kleinsten Fehlerquadrate verwandt, ergeben sich die Koordinaten der beiden Radiuseinlaufpunkte sowie der in den Ebenen liegenden Tangenten p, die in den beiden an die Raumkontur angrenzenden Ebenen liegen. Der gesuchte Raumpunkt P_{M} ergibt sich als der Schnittpunkt der beiden Geraden, die durch die Meßpunkte M1 bis M5 bzw. M7 bis M9 gebildet sind.

Auf diese Weise wird anstelle der Raumkontur eine Ersatzkontur gewonnen, bei der benachbarte Flächen scharfkantig aneinanderstoßen. Die so gebildete Ersatzkontur dient als Vorgabe für die Bahnsteuerung zur Bestimmung paralleler Schnitte quer zum Verlauf der Raumkontur einerseits und andererseits zur Definition der Lage der Ersatzkontur, die näherungsweise den tatsächlichen Verlauf der Raumkontur angibt. Auf diese Weise ist es möglich, mit geringem Aufwand den Verlauf einer Raumkontur annähernd, jedoch mit hinreichender Genauigkeit zu bestimmen.

## Patentansprüche

1. Verfahren zum Vermessen einer sich etwa in einer Längsrichtung erstreckten optischen und/oder geometrischen (Trenn-) Linie in und auf dreidimensionalen Formflächen (i.f. Raumkontur genannt) mittels einer optischen Abtasteinrichtung, die die Koordinaten (X, Y, Z) von Abtastpunkten bestimmt, die wie die Raumkontur in der Oberfläche eines Formkörpers liegen, dadurch gekennzeichnet, dass die Abtasteinrichtung linear und in einer zumindest annähernd senkrecht bezüglich des Verlaufs der Raumkontur (2) gelegenen Abtastebene über diese hinweg bewegt und die Koordinaten einer Folge von Punkten (M1 - M9, N1 - N9) bestimmt wird, die jeweils zwei Tangenten von zur Raumkontur benachbarten Flächen bestimmen, dass als zugeordneter Raumpunkt (PM,PN) der Schnittpunkt der beiden Tangenten bestimmt wird, dass die Raumkontur längs einer zumindest annähernd parallel zur ersten Abtastebene gelegenen zweiten Abtastebene abgetastet und der zugehörige Raumpunkt bestimmt wird und dass längs der durch die beiden Raumpunkte festgelegten Richtung eine erneute Abtastung senkrecht zu dieser Richtung vorgenommen wird.

2. Verfahren nach Anspruch 1, dadurch gekennzeichnet, daß anstelle der Raumkontur die durch die Raumpunkte definierte Ersatzkontur für weitere Verfahrensschritte verwendet wird.

3. Verfahren nach Anspruch 1 oder 2, dadurch gekennzeichnet, daß die Bahnsteuerung der Abtasteinrichtung dem Verlauf der jeweils bestimmten Raumpunkte folgt.

## Claims

1. A method of measuring an optical and/or geometrical (parting) line extending in a longitudinal direction in and on three-dimensional shaped surfaces (hereinafter called a space contour) using an optical scanning device which determines the co-ordinates (X, Y, Z) of scanned points which, like the space contour, lie on the surface of a shaped body, characterised in that the scanning device moves in a straight line over a plane at least approximately at right angles to the course of the space contour (2), and a determination is made of the co-ordinates of a series of points (M1 - M9, N1 - N9) which respectively determine two tangents of surfaces near the space contour; an associated space point (PM, PN) is determined in the form of the point of intersection between the two tangents; the space contour is scanned along a second plane at least approximately parallel to the first scanning plane and the associated space point is determined; and in the direction defined by the two space points another scanning operation is performed at right angles to the said direction.

2. A method according to claim 1, characterised in that instead of the space contour, the equivalent contour defined by the space points is used for further steps in the process.

3. A method according to claim 1 or 2, characterised in that the path control of the scanning device follows the course of the determined space points.

## Revendications

1. Procédé de mesure d'une ligne de séparation optique et/ou géométrique s'étendant dans une direction longitudinale, dans ou sur une surface de forme tridimensionnelle (appelée contour spatial), à l'aide d'une installation de détection optique qui définit les coordonnées (X, Y, Z) des points de détection situés, comme le contour spatial, à la surface d'un corps de forme,
caractérisé en ce que
- l'installation de détection est linéaire et se déplace dans un plan de détection au moins sensiblement perpendiculaire au tracé du contour spatial (2), et l'on définit les coordonnées d'une suite de points (M1-M9 ; N1-N9) qui définissent chaque fois deux tangentes à des surfaces voisines du contour spatial,
- on définit comme point spatial correspondant (PM, PN), l'intersection des deux tangentes,
- on détecte le contour spatial le long d'un second plan de détection au moins sensiblement parallèle au premier plan de détection,
- on définit le point spatial, et
- le long de la direction fixée par les deux points spatiaux, on effectue une nouvelle détection perpendiculairement à cette direction.

2. Procédé selon la revendication 1,
caractérisé en ce qu'
à la place du contour spatial, on utilise le contour de remplacement défini par les points spatiaux pour les étapes de procédé suivantes.

3. Procédé selon l'une des revendications 1 ou 2,
caractérisé en ce que
la commande de la trajectoire de l'installation de détection suit le tracé des points spatiaux chaque fois définis.
